# EUROPÄISCHE PATENTSCHRIFT

(11) **EP 2 335 984 B1**
(45) Veröffentlichungstag und Bekanntmachung des Hinweises auf die Patenterteilung: **05.10.2016**
(21) Anmeldenummer: 10015087.9
(22) Anmeldetag: 29.11.2010
(51) Int. Cl.: C21D 9/48, C21D 9/50, B60R 19/34, C22C 38/02, C22C 38/04, C22C 38/06, C22C 38/32, C22C 38/22, C22C 38/28, C21D 1/673

(54) **Crashbox und Verfahren zu deren Herstellung**
Crashbox and method for its production
Crashbox et procédé destiné à sa fabrication

(30) Priorität: 02.12.2009 DE 102009056443
(43) Veröffentlichungstag der Anmeldung: 22.06.2011
(73) Patentinhaber: Benteler Automobiltechnik GmbH, 33102 Paderborn (DE)
(72) Erfinder: Buschsieweke, Otto, 33102 Paderborn (DE); Kettler, Markus, 33106 Paderborn (DE); Schroeter, Martin, 33102 Paderborn (DE)
(74) Vertreter: Ksoll, Peter

(56) Entgegenhaltungen:
- WO-A1-2010/066896
- DE-A1- 19 743 802
- DE-A1-102008 022 401
- DE-B3-102006 019 567

## Beschreibung

Die Erfindung betrifft eine Crashbox zur Eingliederung zwischen dem Stoßfängerquerträger und einem Fahrzeuglängsträger eines Kraftfahrzeugs sowie ein Verfahren zur Herstellung einer solchen Crashbox.

Stoßfängersysteme dienen primär dem Zweck, bei einem Aufprall auf ein Hindernis die Stoßkräfte aufzufangen und die Karosserie bei einem Anprall mit geringer Geschwindigkeit vor strukturellen Beschädigungen zu schützen. Weiterhin dient eine Stoßfängeranordnung dem Schutz von Fußgängern bei einem Zusammenstoß mit einem Kraftfahrzeug.

Ein Stoßfängersystem besteht üblicherweise aus einem biegesteifen Querträger, welcher mit jeweils einem als Crashbox bezeichneten Bauteil an den rechten und linken Längsträgern angebunden ist. Über den Querträger wird die aus einem Anprall resultierende Energie in die Crashboxen eingeleitet, wo die Stoßenergie in Verformungsarbeit umgewandelt wird. Hierdurch kann das Schadensbild und damit die Schadenshöhe am Kraftfahrzeug signifikant verringert werden.

Crashboxen werden heute vielfach über Flanschplatten mit den Längsträgern verschraubt. Eine im Stand der Technik bekannte Crashbox in Schalenbauweise geht aus der DE 100 14 469 A1 hervor. Die Crashbox ist so ausgelegt, dass sie sich unter einer definierten Kraft plastisch verformt und dabei eine vorgegebene Energiemenge aufnehmen kann.

Eine in der Praxis bewährte Crashbox, wie sie in der DE 100 57 311 A1 beschrieben ist, besteht aus einer im Querschnitt rechteckigen Konstruktion, bestehend aus Ober- und Unterschale. Diese sind im Gesenk U-förmig gebogen und miteinander gefügt. Anschließend wird die Crashbox mit einer längsträgerseitigen Flanschplatte versehen. Diese Bauart zeichnet sich durch eine hohe Quersteifigkeit aus.

Weitere Vorschläge von Crashboxen gehen aus der DE 10 2004 041 476 A1 oder der DE 10 2005 026 444 A1 hervor.

Die US 2008/0030031 A1 offenbart eine Crashbox aus einem nicht näher spezifizierten Stahl.

Aus der DE 10 2005 054 847 B3 ist ein hochfestes Stahlbauteil mit gezielter Deformation im Crashfall bekannt, welches einer Wärmebehandlung bei Temperaturen von 320 °C bis 400 °C unterzogen wurde.

Aus der DE 10 2008 022 401 A1 ist ein Stahlformteil geeignet als Längsprofil für eine Crashbox bekannt, welches zunächst durch Warmumformen und Presshärten hergestellt wird und eine entsprechende Stahlzusammensetzung aufweist. Nach dem Presshärten wird das Stahlbauteil bei 400° C für weniger als 60 Sekunden wärmebehandelt.

Aus der DE 10 2006 019 567 B3 ist ferner ein 22MnB5 Stahl bekannt, aus dem Karosseriebauteile hergestellt werden, wobei die Bauteile durch Warmumformen und Presshärten in Form gebracht werden. Nach dem Presshärten wird das Formbauteil erneut angelassen bei einer Temperatur von 320° C für einen Zeitraum von 4 bis 6 Minuten.

Der Erfindung liegt ausgehend vom Stand der Technik die Aufgabe zu Grunde, eine Crashbox zu schaffen, welche im Vergleich zu bekannten Bauarten bei gleichem Gewicht ein besseres Energieabsorptionsvermögen besitzt oder welche bei gleicher Effizienz ein geringeres Gewicht aufweist, sowie ein Verfahren zur Herstellung einer solchen funktional verbesserten Crashbox aufzuzeigen.

Die Lösung des gegenständlichen Teils dieser Aufgabe besteht nach der Erfindung in einer Crashbox gemäß den Merkmalen von Anspruch 1.

Der verfahrensmäßige Teil der Aufgabe wird durch ein Verfahren gemäß Anspruch 14 gelöst.

Vorteilhafte Ausgestaltungen und Weiterbildungen des grundsätzlichen Erfindungsgedankens sind Gegenstand der abhängigen Ansprüche.

Ein wesentlicher Aspekt der Erfindung bildet die Verwendung eines Stahlblechs aus einer härtbaren Mangan-Bor-Stahllegierung zur Herstellung des Längsprofils der Crashbox. Das Längsprofil ist warmgeformt und pressgehärtet. Nach dem Warmformen und dem Presshärten wird das Längsprofil gezielt zumindest partiell wärmbehandelt. Zum Einsatz gelangt eine Stahllegierung, die in Gewichtsprozenten ausgedrückt besteht aus Kohlenstoff (C) 0,15 % bis 0,30 %, Silizium (Si) 0,10 % bis 0,70 %, Mangan (Mn) 1,0 % bis 2,50 %, Chrom (Cr) 0,10 % bis 0,50 %, Titan (Ti) 0,02 % bis 0,05 %, Bor (B) 0,001 % bis 0,005 %, Aluminium (Al) 0,01 % bis 0,06 %, Molybdän (Mo) bis 0,5 %, Phosphor (P) maximal 0,025 %, Schwefel (S) maximal 0,015 %, wobei der Rest aus Eisen (Fe) besteht einschließlich von etwaigen erschmelzungsbedingten Verunreinigungen. Dieser Werkstoff lässt sich warmumformen sowie vergüten und weist sehr hohe mechanische Werte nach der Wärmebehandlung auf. Der Molybdän-Anteil der Stahllegierung liegt vorzugsweise zwischen 0,01 % und 0,05 %. Grundsätzlich kann aber auch kein Molybdän in der Stahllegierung enthalten sein.

Erfindungsgemäß ist das Längsprofil warmgeformt und pressgehärtet. Nach dem Presshärten ist das Längsprofil bei einer Temperatur zwischen 200 °C und 800 °C wärmebehandelt worden. Die Wärmebehandlung wird erfindungsgemäß derart ausgeführt und temperatur- sowie zeitmäßig gesteuert, dass der Werkstoff des Längsprofils nach der Wärmebehandlung einen Biegewinkel gemessen nach DIN EN ISO 7438 von größer gleich 60 °, insbesondere 60 ° bis 80 °, vorzugsweise von 65° bis 78° aufweist.

Die internationale Norm DIN EN ISO 7438 mit dem Titel: "Metallische Werkstoffe - Biegeversuch" legt ein Verfahren zur Bestimmung der plastischen Verformbarkeit metallischer Werkstoffe im Biegeversuch fest. Die der DIN EN ISO 7438 entsprechende US-Norm ist die ASTM E290-09 "Standard Test Methods for Bend Testing of Material for Ductility".

Vorzugsweise wird die Wärmebehandlung nach dem Presshärten bei einer Temperatur zwischen 200 °C und 600 °C durchgeführt. Wiederum vorzugsweise erfolgt die Wärmebehandlung nach dem Presshärten bei einer Temperatur zwischen 300 °C und 500 °C und insbesondere bei einer Temperatur zwischen 350 °C bis 500 °C. Die Wärmebehandlung erfolgt über einen Zeitraum von 30 Minuten bis 240 Minuten. Die gewünschten Bauteileigenschaften werden über eine Temperatur- und Zeitsteuerung eingestellt, wobei die beiden Parameter jeweils aufeinander abgestimmt werden. Die Wärmebehandlung kann in diesem Zusammenhang über einen Zeitraum von 45 Minuten bis 200 Minuten und wiederum vorzugsweise über einen Zeitraum von 60 Minuten bis 150 Minuten durchgeführt werden.

Das Längsprofil bzw. das Material des Längsprofils weist nach der Wärmebehandlung einen Biegewinkel gemessen nach DIN EN ISO 7438 von 60° bis 120°, insbesondere größer 60°, vorzugsweise zwischen 60° bis 80° auf. Die verbesserten Werkstoffeigenschaften des Längsprofils lassen sich durch den so genannten Plättchenbiegeversuch nach DIN EN ISO 7438 nachweisen. Hierbei wird eine Werkstoff- bzw. Materialprobe in einem scharfen Radius gebogen. Die durchgeführten Versuche zeigten, dass das Material erst spät, also bei einem großen Biegewinkel, bricht. Der Versuchsaufbau hierbei lässt sich wie folgt beschreiben:
- DIN EN ISO 7438, Abschnitt 4.2 (Biegevorrichtung mit Auflagerrollen und einem Biegestempel)
- Abstand Auflagerrollen: I = 2*a+0.5mm = 4.50mm
- Durchmesser Auflagerrollen: 30mm
- Durchmesser Biegestempel: D = 0.8mm
- Probenwanddicke: a = 2.0mm
- Probenabmessungen: L = 60mm x 60mm

Durch die Wärmebehandlung nach dem Presshärten erreicht man eine Herabsetzung von Härtespannungen, ohne eine wesentliche Einbuße an Härte in Kauf nehmen zu müssen. Gleichzeitig wird die Sprödigkeit des Härtegefüges gemildert und die Zähigkeit verbessert. Die Zugfestigkeit Rₘ wird abgesenkt von ca. 1.500 MPa auf etwa 1.200 MPa. Die Streckgrenze Rp 0,2 des Stahlwerkstoffs liegt dann bei etwa 1.150 MPa und die Bruchdehnung A₅ beträgt ca. 8 %. Charakteristisch für die erfindungsgemäße Crashbox ist, dass der Biegewinkel des Werkstoffs durch die Wärmebehandlung erhöht werden kann, und zwar auf 60° bis 120 °, vorzugsweise liegt der Biegewinkel zwischen 60 ° und 80 °. Dies hat bedeutsamen Einfluss auf das Faltverhalten der erfindungsgemäßen Crashbox und eine homogene Energieabsorption bei der plastischen Verformung im Falle eines Aufpralls. Zudem ermöglichen die mechanischen Eigenschaften der Crashbox signifikante Gewichtseinsparungen.

Der nachträgliche Anlassprozess mit einer Wärmebehandlung bei 200 °C bis 800 °C, vorzugsweise 200 °C bis 600 °C, wiederum vorzugsweise 300 °C bis 500 °C und insbesondere 350 °C bis 500 °C, vorzugsweie 350 °C bis 450 °C für 30 Minuten bis 240 Minuten, vorzugsweise 45 Minuten bis 200 Minuten und insbesondere 60 Minuten bis 150 Minuten stellt sicher, dass der Werkstoff der Crashbox trotz hoher Festigkeit die erforderliche Duktilität aufweist, um so ein zufrieden stellendes Faltenbeulen ohne Bruch zu erreichen. Die Wärmebehandlung kann beispielsweise induktiv erfolgen oder im elektrisch beheizten Kammerofen. Durch den Einsatz eines hochfesten Stahlwerkstoffes kann die Wandstärke der Crashbox verringert werden, so dass gegenüber herkömmlichen Bauteilen ein Gewichtsvorteil erzielt werden kann. Im Vergleich zu herkömmlichen Bauarten kann bei gleichem Gewicht eine bessere Energieabsorption erreicht oder bei gleicher Effizienz ein Gewichtsvorteil realisiert werden. Neben einem geringeren Bauteilgewicht lässt sich auch eine geringere Bauteillänge realisieren.

Bei einer für die Praxis besonders vorteilhaften Ausführungsform der Crashbox besteht das Längsprofil aus zwei U-förmig konfigurierten Schalenkörpern. Vorzugsweise werden die Schalenkörper warmgeformt sowie pressgehärtet und vor dem Fügen zum Längsprofil der Wärmebehandlung im erfindungsgemäßen Temperaturbereich unterzogen. Möglich ist es auch, das fertige Längsprofil wärmezubehandeln und diesem die gewünschten Werkstoffeigenschaften zu geben.

Eine Ausführungsform der erfindungsgemäßen Crashbox sieht vor, dass die Wandstärke des Längsprofils variiert. Hierbei kann die Wandstärke des Längsprofils sowohl in Längsrichtung des Längsprofils als auch in Umfangsrichtung variieren.

Des Weiteren können die Seitenwände des Längsprofils profiliert sein, beispielsweise durch Sicken, Einprägungen, Ausstellungen oder Durchbrechungen. Insbesondere kann das Längsprofil eine Initialdeformationsstelle aufweisen. Durch die Initialdeformationsstelle wird im Falle eines einen zulässigen Grenzwert überschreitenden Anpralls eine plastische Verformung des Längsprofils mit einer homogenen Faltenbildung eingeleitet.

Grundsätzlich kann das Längsprofil unterschiedliche Querschnittsgeometrien besitzen. Für den praktischen Einsatz wird ein Längsprofil mit einer pyramidenstumpfförmigen Querschnittsgeometrie als vorteilhaft angesehen. Insbesondere nimmt der Querschnitt vom querträgerseitigen Ende des Längsprofils zum längsträgerseitigen Ende des Längsprofils hin zu.

Das Längsprofil weist am querträgerseitigen Ende eine Montageplatte auf. Das Längsprofil und die Montageplatte können voneinander verschiedene Wandstärken aufweisen. Insbesondere ist die Montageplatte dicker als die Wandstärke des Längsprofils. Die Montageplatte kann sich einstückig an das Längsprofil angliedern. Möglich ist es, dass die Montageplatte und das Längsprofil gemeinsam geformt werden. Besteht das Längsprofil aus zwei Schalenkörpern, können Montageplattenabschnitte beim Umformvorgang am Schalenkörper ausgeformt werden.

Die Crashbox und deren Teile, insbesondere das Längsprofil, sind in einer für die Praxis vorteilhaften Ausführung mit einer Beschichtung versehen, insbesondere einer Korrosionsbeschichtung aus vorzugsweise Aluminium/Silizium oder Zink. Hierzu können das Längsprofil oder die zur Herstellung des Längsprofils eingesetzten Bauteile sowie die anderen Komponenten der Crashbox vor oder nach der Wärmebehandlung mit einer Beschichtung, insbesondere mit einer metallischen Beschichtung, versehen werden.

Die Erfindung ist nachfolgend anhand von schematischen Zeichnungen näher beschrieben. Es zeigen:
- Figur 1: eine Stoßfängeranordnung mit erfindungsgemäßen Crashboxen in einer perspektivischen Ansicht und
- Figur 2: ebenfalls in einer Perspektive eine erfindungsgemäße Crashbox.

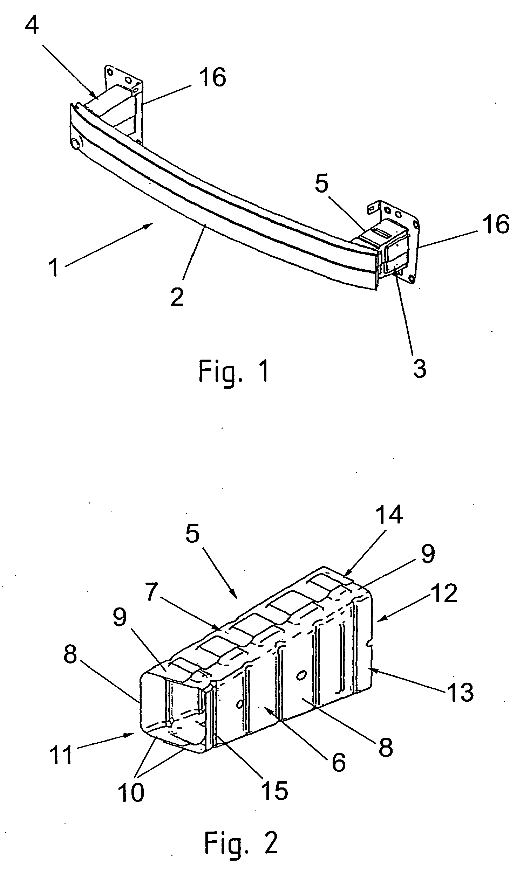

Figur 1 zeigt eine Stoßfängeranordnung 1, die bestimmt ist für den durch eine Verschalung verkleideten Front- oder Heckbereich der Karosserie eines Kraftfahrzeugs.

Die Stoßfängeranordnung 1 weist einen quer zu den hier nicht dargestellten Längsträgern eines Kraftfahrzeugs angeordneten Querträger 2 und Crashboxen 3, 4 auf, die zwischen dem Querträger 2 und den Längsträgern eingegliedert sind. Die Crashboxen 3, 4 nehmen bei einem Frontalaufprall mit geringer Geschwindigkeit, wie es typisch für einen Auffahrunfall innerorts ist, die Aufprallenergie durch plastische Verformung auf und absorbieren die Aufprallenergie durch Umwandlung in Verformungsarbeit. Weiterhin soll die Stoßfängeranordnung 1 zum Schutz von Fußgängern beitragen und insbesondere das Verletzungsrisiko bei einem Zusammenstoß mit dem Kraftfahrzeug verringern.

Der Querträger 2 besteht vorzugsweise aus einem Metallblech, vorzugsweise einem warmgeformten und pressgehärteten hochfesten Stahlblech.

Eine Crashbox 3, 4, wie sie in der Figur 2 im Detail zu erkennen ist, besitzt ein Längsprofil 5 in Schalenbauweise, welches jeweils aus zwei Schalenkörpern 6, 7 zusammengesetzt ist. Die Schalenkörper 6, 7 sind U-förmig konfiguriert mit einem Steg 8 und zwei Schenkeln 9, 10. Die Schalenkörper 6, 7 sind konfigurativ aufeinander abgestimmt und überlappen sich endseitig ihrer Schenkel 9, 10. Im Überlappungsbereich sind die Schenkel 9, 10 gefügt, beispielsweise durch eine Rollschweißnaht.

Das Längsprofil 5 bzw. die Schalenkörper 6, 7 sind aus einem Stahlblech warmgeformt und im Umformwerkzeug eingespannt und pressgehärtet. Hierzu wird das Stahlblech auf eine Temperatur oberhalb des AC₃-Punktes erwärmt, üblicherweise auf eine Temperatur zwischen 900 °C und 980 °C, in das Umformwerkzeug überführt und dort warm umgeformt sowie durch Abkühlung vergütet und gehärtet.

Als Werkstoff für das Längsprofil 5 bzw. die Schalenkörper 6, 7 kommt eine Stahllegierung zur Anwendung, die in Gewichtsprozenten ausgedrückt besteht aus Kohlenstoff (C) 0,15 % bis 0,30 %, Silizium (Si) 0,10 % bis 0,70 %, Mangan (Mn) 1,0 % bis 2,50 %, Chrom (Cr) 0,10 % bis 0,50 %, Titan (Ti) 0,02 % bis 0,05 %, Bor (B) 0,001 % bis 0,005 %, Aluminium (Al) 0,01 % bis 0,06 %, Molybdän (Mo) bis 0,5 %, Phosphor (P) maximal 0,025 %, Schwefel (S) maximal 0,015 %, wobei der Rest aus Eisen (Fe) besteht einschließlich von etwaigen erschmelzungsbedingten Verunreinigungen.

Nach dem Warmumformen und Presshärten werden das Längsprofil 5 bzw. die Schalenkörper 6, 7 einer Wärmebehandlung unterzogen bei einer Temperatur zwischen 300 °C und 500 °C, vorzugsweise bei einer Temperatur von 350 °C bis 500 °C. Die Wärmebehandlung erfolgt über einen Zeitraum zwischen 45 Minuten und 90 Minuten. Die Wärmebehandlung wird zielgerichtet so ausgeführt, dass der Werkstoff des Längsprofils 5 nach der Wärmebehandlung einen Biegewinkel gemessen nach DIN EN ISO 7438 von 60 ° bis 120 °, insbesondere zwischen 60 ° bis 80 ° aufweist. Der Biegewinkel kann auch gemäß dem Standard ASTM E290-09 gemessen werden. Zur Einstellung der Werkstoffeigenschaften wird die Wärmebehandlung temperatur- und zeitmäßig gesteuert.

Durch die Wärmebehandlung nach dem Presshärten nimmt die Zugfestigkeit gegenüber einem unbehandelten Bauteil ab, wohingegen die Streckgrenze in etwa gleich bleibt. Dennoch verfügt der Werkstoff nach wie vor über die für die Funktion der Crashbox notwendigen hochfesten mechanischen Eigenschaften mit ausreichend hohen Festigkeiten. Die dem Presshärten nachgeschaltete Wärmebehandlung führt dazu, dass die Duktilität des Werkstoffs steigt, so dass die Crashbox 3, 4 bei entsprechender Belastung unter Faltenbildung plastisch verformt und Energie absorbiert, ohne zu Brechen oder zu Reißen.

Grundsätzlich ist darauf hinzuweisen, dass das Längsprofil 5 als Ganzes der nachträglichen Wärmebehandlung nach dem Presshärten unterzogen werden kann. Vorzugsweise werden die Schalenkörper 6, 7 warmgeformt, pressgehärtet und nach dem Presshärten wärmebehandelt. Anschließend werden die Schalenkörper 6, 7 zum Längsprofil 5 gefügt.

Man erkennt, dass das Längsprofil 5 im Querschnitt pyramidenstumpfförmig konfiguriert ist, wobei der Querschnitt vom querträgerseitigen Ende 11 zum längsträgerseitigen Ende 12 hin zunimmt.

Die Stege 8 und die Schenkel 9, 10 der Schalenkörper 6, 7 bilden die Seitenwände 13, 14 des Längsprofils 5. Die Seitenwände 13, 14 sind profiliert und die Profilierung ist durch Sicken, Durchbrechungen sowie Einprägungen gebildet. Zweckmäßiger Weise ist am Längsprofil 5 eine Initialdeformationsstelle 15 ausgebildet.

Wie anhand der Figur 1 zu erkennen, ist am längsträgerseitigen Ende 12 jeder Crashbox 3, 4 eine Montageplatte 16 angeordnet. Über die Montageplatten 16 erfolgt die Festlegung der Stoßfängeranordnung 1 an den Längsträgern des Kraftfahrzeugs.

Das Längsprofil 5 und die Montageplatte 16 können voneinander verschiedene Wandstärken aufweisen. Grundsätzlich kann die Montageplatte 16 ein separates Bauteil sein. Möglich ist es auch, die Montageplatte 16 als einstückiger Bestandteil am längsträgerseitigen Ende 12 des Längsprofils 5 auszubilden.

Für die Praxis vorteilhaft ist die Crashbox 3, 4 und insbesondere das Längsprofil 5 mit einer vorzugsweise metallischen Beschichtung auf Aluminium/Silizium- oder Zinkbasis versehen. Grundsätzlich ist auch eine anderartige Korrosionsbeschichtung der Crashbox 3, 4 bzw. von deren Bauteilen möglich.

### Bezugszeichen:

- 1 -: Stoßfängeranordnung
- 2 -: Querträger
- 3 -: Crashbox
- 4 -: Crashbox
- 5 -: Längsprofil
- 6 -: Schalenkörper
- 7 -: Schalenkörper
- 8 -: Steg
- 9 -: Schenkel
- 10 -: Schenkel
- 11 -: querträgerseitiges Ende v. 5
- 12 -: längsträgerseitiges Ende v. 5
- 13 -: Seitenwand
- 14 -: Seitenwand
- 15 -: Initialdeformationsstelle
- 16 -: Montageplatte

## Patentansprüche

1. Crashbox zur Eingliederung zwischen dem Stoßfängerquerträger und einem Fahrzeuglängsträger eines Kraftfahrzeugs mit einem Längsprofil (5) aus einer Stahllegierung, die - in Gewichtsprozenten ausgedrückt - besteht aus
| | |
|---|---|
| Kohlenstoff (C) | 0,15 bis 0,30 % |
| Silizium (Si) | 0,10 bis 0,70 % |
| Mangan (Mn) | 1,00 bis 2,50 % |
| Chrom (Cr) | 0,10 bis 0,50 % |
| Titan (Ti) | 0,02 bis 0,05 % |
| Bor (B) | 0,001 bis 0,005 % |
| Aluminium (Al) | 0,01 bis 0,06 % |
| Molybdän (Mo) | bis 0,50 % |
| Phosphor(P) | max. 0,025 % |
| Schwefel (S) | max. 0,015 % |
Rest Eisen (Fe) einschließlich erschmelzungsbedingter Verunreinigungen, wobei das Längsprofil (5) warmgeformt und pressgehärtet ist und danach bei einer Temperatur von 200 °C bis 800° C wärmebehandelt worden ist, wobei die Wärmebehandlung über einen Zeitraum von 30 min. bis 240 min. durchgeführt worden ist und der Werkstoff des Längsprofils (5) nach der Wärmebehandlung einen Biegewinkel gemessen nach DIN EN ISO 7438 von größer gleich 60 ° aufweist.

2. Crashbox nach Anspruch 1, **dadurch gekennzeichnet, dass** das Längsprofil (5) bei einer Temperatur zwischen 200 °C und 600 °C wärmebehandelt ist.

3. Crashbox nach Anspruch 1 oder 2, **dadurch gekennzeichnet, dass** das das Längsprofil (5) bei einer Temperatur zwischen 300 °C und 500 °C wärmebehandelt ist.

4. Crashbox nach einem der Ansprüche 1 bis 3, **dadurch gekennzeichnet, dass** das Längsprofil (5) bei einer Temperatur zwischen 350 °C und 500 °C wärmebehandelt ist.

5. Crashbox nach einem der Ansprüche 1 bis 4, **dadurch gekennzeichnet, dass** der Werkstoff des Längsprofils (5) nach der Wärmebehandlung einen Biegewinkel gemessen nach DIN EN ISO 7438 von 60 ° bis 120 °, vorzugsweise von 60 ° bis 80 °, aufweist.

6. Crashbox nach wenigstens einem der Ansprüche 1 bis 5, **dadurch gekennzeichnet, dass** das Längsprofil (5) aus zwei U-förmig konfigurierten Schalenkörpern (6, 7) besteht.

7. Crashbox nach wenigstens einem der Ansprüche 1 bis 6, **dadurch gekennzeichnet, dass** die Wandstärke des Längsprofils (5) in Längsrichtung und/oder Umfangsrichtung variiert.

8. Crashbox nach wenigstens einem der Ansprüche 1 bis 7, **dadurch gekennzeichnet, dass** das Längsprofil (5) eine pyramidenstumpfförmige Querschnittsgeometrie aufweist.

9. Crashbox nach wenigstens einem der Ansprüche 1 bis 8, **dadurch gekennzeichnet, dass** Seitenwände (13, 14) des Längsprofils (5) Sicken, Einprägungen, Ausstellungen und/oder Durchbohrungen aufweist.

10. Crashbox nach wenigstens einem der Ansprüche 1 bis 9, **dadurch gekennzeichnet, dass** das Längsprofil (5) eine Initialdeformationsstelle (15) aufweist.

11. Crashbox nach wenigstens einem der Ansprüche 1 bis 10, **dadurch gekennzeichnet, dass** das Längsprofil (5) am längsträgerseitigen Ende (12) eine Montageplatte (16) aufweist.

12. Crashbox nach wenigstens einem der Ansprüche 1 bis 11, **dadurch gekennzeichnet, dass** das Längsprofil (5) und die Montageplatte (16) von einander verschiedene Wandstärken aufweisen.

13. Crashbox nach wenigstens einem der Ansprüche 1 bis 12, **dadurch gekennzeichnet, dass** das Längsprofil (5) eine Beschichtung aufweist.

14. Verfahren zur Herstellung einer Crashbox, bei welchem ein Längsprofil (5) aus zumindest einem Stahlblech gefertigt wird, wobei das Stahlblech aus einer Stahllegierung besteht, die in Gewichtsprozenten ausgedrückt folgende Zusammensetzung aufweist:
| | |
|---|---|
| Kohlenstoff (C) | 0,15 bis 0,30 % |
| Silizium (Si) | 0,10 bis 0.70% |
| Mangan (Mn) | 1,00 bis 2,50 % |
| Chrom (Cr) | 0,10 bis 0,50 % |
| Titan (Ti) | 0,02 bis 0,05 % |
| Bor (B) | 0,001 bis 0,005 % |
| Aluminium (Al) | 0,01 bis 0,06 % |
| Molybdän (Mo) | bis 0,50 % |
| Phosphor (P) | max. 0,025 % |
| Schwefel (S) | max. 0,015 % |
Rest Eisen (Fe) einschließlich erschmelzungsbedingter Verunreinigungen, wobei das Stahlblech warmgeformt und pressgehärtet ist und nach dem Presshärten bei einer Temperatur von 200 °C bis 800° C für 30 min. bis 240 min. wärmebehandelt wird, wobei die Wärmebehandlung derart ausgeführt wird, dass der Werkstoff des Längsprofils (5) nach der Wärmebehandlung einen Biegewinkel gemessen nach DIN EN ISO 7438 von größer gleich 60 °, insbesondere von 60 ° bis 80 °, aufweist.

15. Verfahren nach Anspruch 14, **dadurch gekennzeichnet, dass** die Wärmebehandlung bei einer Temperatur zwischen 200 °C und 600 °C durchgeführt wird.

16. Verfahren nach Anspruch 14 oder 15, **dadurch gekennzeichnet, dass** die Wärmebehandlung bei einer Temperatur zwischen 300 °C und 500 °C durchgeführt wird.

17. Verfahren nach einem der Ansprüche 14 bis 16, **dadurch gekennzeichnet, dass** die Wärmebehandlung bei einer Temperatur zwischen 350 °C und 500 °C durchgeführt wird.

18. Verfahren nach einem der Ansprüche 14 bis 17, **dadurch gekennzeichnet, dass** die Wärmebehandlung über einen Zeitraum von 45 min bis 200 min durchgeführt wird.

19. Verfahren nach einem der Ansprüche 14 bis 17, **dadurch gekennzeichnet, dass** die Wärmebehandlung über einen Zeitraum von 60 min bis 150 min durchgeführt wird.

20. Verfahren nach wenigstens einem der Ansprüche 14 bis 19, **dadurch gekennzeichnet, dass** das Längsprofil (5) aus zwei U-förmig konfigurierten Schalenkörpern (6, 7) zusammengesetzt wird.

21. Verfahren nach Anspruch 20, **dadurch gekennzeichnet, dass** die Schalenkörper (6, 7) vor dem Fügen zum Längsprofil (5) der Wärmebehandlung unterzogen werden.

22. Verfahren nach Anspruch 20, **dadurch gekennzeichnet, dass** die Wärmebehandlung am aus den Schalenkörpern (6, 7) gebildeten Längsprofil (5) durchgeführt wird.

23. Verfahren nach wenigstens einem der Ansprüche 14 bis 22, **dadurch gekennzeichnet, dass** das Längsprofil (5) oder die das Längsprofil bildenden Schalenkörper (6, 7) vor oder nach der Wärmebehandlung mit einer Beschichtung versehen werden.

## Claims

1. Crash box for integration between the bumper crossbeam and a longitudinal beam of a motor vehicle, having a longitudinal profile (5) made from a steel alloy which - expressed in percentage by weight-comprises
| | |
|---|---|
| carbon (C) | 0.15 to 0.30% |
| silicon (Si) | 0.10 to 0.70% |
| manganese (Mn) | 1.00 to 2.50% |
| chromium (Cr) | 0.10 to 0.50% |
| titanium (Ti) | 0.02 to 0.05% |
| boron (B) | 0.001 to 0.005% |
| aluminium (Al) | 0.01 to 0.06% |
| molybdenum (Mo) | up to 0.50% |
| phosphorus(P) | max 0.025% |
| sulphur (S) | max 0.015% |
the balance being iron (Fe), including any melting-related impurities, wherein the longitudinal profile (5) is hot formed and press hardened and then at a temperature of 200°C to 800°C has been heat treated, wherein the heat treatment has been carried out over a period of 30 min to 240 min and the material of the longitudinal profile (5) after heat treatment has a bending angle measured according to DIN EN ISO 7438 of greater than or equal to 60°.

2. Crash box according to claim 1, **characterised in that** the longitudinal profile (5) is heat treated at a temperature between 200°C and 600°C.

3. Crash box according to claim 1 or 2, **characterised in that** the longitudinal profile (5) is heat treated at a temperature between 300°C and 500°C.

4. Crash box according to any one of claims 1 to 3, **characterised in that** the longitudinal profile (5) is heat treated at a temperature between 350°C and 500°C.

5. Crash box according to any one of claims 1 to 4, **characterised in that** the material of the longitudinal profile (5) after heat treatment has a bending angle measured according to DIN EN ISO 7438 of 60° to 120°, preferably of 60° to 80°.

6. Crash box according to at least one of claims 1 to 5, **characterised in that** the longitudinal profile (5) comprises two shell bodies (6, 7) configured in a U-shape.

7. Crash box according to at least one of claims 1 to 6, **characterised in that** the wall thickness of the longitudinal profile (5) varies in the longitudinal direction and/or circumferential direction.

8. Crash box according to at least one of claims 1 to 7, **characterised in that** the longitudinal profile (5) has a truncated pyramid-shaped cross-sectional geometry.

9. Crash box according to at least one of claims 1 to 8, **characterised in that** side walls (13, 14) of the longitudinal profile (5) has beads, impressions, protrusions and/or through-holes.

10. Crash box according to at least one of claims 1 to 9, **characterised in that** the longitudinal profile (5) has an initial deformation point (15).

11. Crash box according to at least one of claims 1 to 10, **characterised in that** at the longitudinal beam-side end (12) the longitudinal profile (5) has an assembly plate (16).

12. Crash box according to at least one of claims 1 to 11, **characterised in that** the longitudinal profile (5) and the assembly plate (16) have different wall thicknesses.

13. Crash box according to at least one of claims 1 to 12, **characterised in that** the longitudinal profile (5) has a coating.

14. Method for producing a crash box, wherein a longitudinal profile (5) is produced from at least one steel sheet, wherein the steel sheet is made from a steel alloy which has the following composition expressed in percent by weight:
| | |
|---|---|
| carbon (C) | 0.15 to 0.30% |
| silicon (Si) | 0.10 to 0.70% |
| manganese (Mn) | 1.00 to 2.50% |
| chromium (Cr) | 0.10 to 0.50% |
| titanium (Ti) | 0.02 to 0.05% |
| boron (B) | 0.001 to 0.005% |
| aluminium (Al) | 0.01 to 0.06% |
| molybdenum (Mo) | up to 0.50% |
| phosphorus(P) | max 0.025% |
| sulphur (S) | max 0.015% |
the balance being iron (Fe), including any melting-related impurities, wherein the steel sheet is hot formed and press hardened and after press hardening is heat treated at a temperature of 200°C to 800°C for 30 min to 240 min, wherein the heat treatment is carried out such that the material of the longitudinal profile (5) after heat treatment has a bending angle measured according to DIN EN ISO 7438 of greater than or equal to 60°, in particular of 60° to 80°.

15. Method according to claim 14, **characterised in that** the heat treatment is carried out at a temperature between 200°C and 600°C.

16. Method according to claim 14 or 15, **characterised in that** the heat treatment is carried out at a temperature between 300°C and 500°C.

17. Method according to any one of claims 14 to 16, **characterised in that** the heat treatment is carried out at a temperature between 350°C and 500°C.

18. Method according to any one of claims 14 to 17, **characterised in that** the heat treatment is carried out over a period of 45 min to 200 min.

19. Method according to any one of claims 14 to 17, **characterised in that** the heat treatment is carried out over a period of 60 min to 150 min.

20. Method according to at least one of claims 14 to 19, **characterised in that** the longitudinal profile (5) is composed of two shell bodies (6, 7) configured in a U-shape.

21. Method according to claim 20, **characterised in that** the shell bodies (6, 7) are subjected to heat treatment before being joined to form the longitudinal profile (5).

22. Method according to claim 20, **characterised in that** the heat treatment is carried out on the longitudinal profile (5) formed from the shell bodies (6, 7).

23. Method according to at least one of claims 14 to 22, **characterised in that** the longitudinal profile (5) or the shell bodies (6, 7) forming the longitudinal profile (5) are provided with a coating before or after heat treatment.

## Revendications

1. Boîte-tampon destinée à être insérée entre la traverse de pare-chocs et un longeron de véhicule d'un véhicule avec un profilé longitudinal (5) en un alliage d'acier qui est constitué des éléments suivants - exprimés en pourcentages pondéraux - :
| | |
|---|---|
| carbone (C) | 0,15 à 0,30% |
| silicium (Si) | 0,10 à 0,70% |
| manganèse (Mn) | 1,00 à 2,50% |
| chrome (Cr) | 0,10 à 0,50% |
| titane (Ti) | 0,02 à 0,05% |
| bore (B) | 0,001 à 0,005% |
| aluminium (Al) | 0,01 à 0,06% |
| molybdène (Mo) | jusqu'à 0,50% |
| phosphore(P) | au maximum 0,025% |
| soufre (S) | au maximum 0,015% |
pour le reste, du fer (Fe), y compris des impuretés dues à l'élaboration,
le profilé longitudinal (5) étant façonné à chaud et trempé à la presse puis subissant un traitement thermique à une température comprise entre 200 °C et 800 °C, le traitement thermique étant effectué pendant un intervalle de temps compris entre 30 minutes et 240 minutes et le matériau du profilé longitudinal (5) ayant après le traitement thermique un angle de pliage mesuré selon DIN EN ISO 7438 supérieur ou égal à 60°.

2. Boîte-tampon selon la revendication 1, **caractérisée en ce que** le profilé longitudinal (5) subit un traitement thermique à une température comprise entre 200 °C et 600 °C.

3. Boîte-tampon selon la revendication 1 ou 2, **caractérisée en ce que** le profilé longitudinal (5) subit un traitement thermique à une température comprise entre 300 °C et 500 °C.

4. Boîte-tampon selon l'une des revendications 1 à 3, **caractérisée en ce que** le profilé longitudinal (5) subit un traitement thermique à une température comprise entre 350 °C et 500 °C.

5. Boîte-tampon selon l'une des revendications 1 à 4, **caractérisée en ce que** le matériau du profilé longitudinal (5) a après le traitement thermique un angle de pliage mesuré selon DIN EN ISO 7438 compris entre 60° et 120°, de préférence entre 60° et 80°.

6. Boîte-tampon selon au moins l'une des revendications 1 à 5, **caractérisée en ce que** le profilé longitudinal (5) est constitué de deux corps formant coques (6, 7) en forme de U.

7. Boîte-tampon selon au moins l'une des revendications 1 à 6, **caractérisée en ce que** l'épaisseur de paroi du profilé longitudinal (5) varie dans la direction longitudinale et/ou dans la direction circonférentielle.

8. Boîte-tampon selon au moins l'une des revendications 1 à 7, **caractérisée en ce que** le profilé longitudinal (5) a une géométrie de section transversale en forme de pyramide tronquée.

9. Boîte-tampon selon au moins l'une des revendications 1 à 8, **caractérisée en ce que** des parois latérales (13, 14) du profilé longitudinal (5) comportent des moulures, des zones embouties, des bosses et/ou des perforations.

10. Boîte-tampon selon au moins l'une des revendications 1 à 9, **caractérisée en ce que** le profilé longitudinal (5) comporte une zone de déformation initiale (15).

11. Boîte-tampon selon au moins l'une des revendications 1 à 10, **caractérisée en ce que** le profilé longitudinal (5) comporte une plaque de montage (16) à son extrémité (12) située du côté du longeron.

12. Boîte-tampon selon au moins l'une des revendications 1 à 11, **caractérisée en ce que** le profilé longitudinal (5) et la plaque de montage (16) ont des épaisseurs de paroi différentes l'une de l'autre.

13. Boîte-tampon selon au moins l'une des revendications 1 à 12, **caractérisée en ce que** le profilé longitudinal (5) comporte un revêtement.

14. Procédé de fabrication d'une boîte-tampon, selon lequel on fabrique un profilé longitudinal (5) à partir d'au moins une tôle d'acier, la tôle d'acier étant en un alliage d'acier qui a la composition suivante exprimée en pourcentages pondéraux :
| | |
|---|---|
| carbone(C) | 0,15 à 0,30% |
| silicium (Si) | 0,10 à 0,70% |
| manganèse (Mn) | 1,00 à 2,50% |
| chrome (Cr) | 0,10 à 0,50% |
| titane (Ti) | 0,02 à 0,05% |
| bore (B) | 0,001 à 0,005% |
| aluminium (Al) | 0,01 à 0,06% |
| molybdène (Mo) | jusqu'à 0,50% |
| phosphore(P) | au maximum 0,025% |
| soufre (S) | au maximum 0,015% |
pour le reste, du fer (Fe), y compris des impuretés dues à l'élaboration,
la tôle d'acier étant façonnée à chaud et trempée à la presse puis subissant après la trempe un traitement thermique à une température comprise entre 200 °C et 800 °C, le traitement thermique étant effectué pendant un intervalle de temps compris entre 30 minutes et 240 minutes, le traitement thermique étant réalisé de telle sorte que le matériau du profilé longitudinal (5) a après le traitement thermique un angle de pliage mesuré selon DIN EN ISO 7438 supérieur ou égal à 60°, compris notamment entre 60° et 80°.

15. Procédé selon la revendication 14, **caractérisé en ce que** le traitement thermique est effectué à une température comprise entre 200 °C et 600 °C.

16. Procédé selon la revendication 14 ou 15, **caractérisé en ce que** le traitement thermique est effectué à une température comprise entre 300 °C et 500 °C.

17. Procédé selon l'une des revendications 14 à 16, **caractérisé en ce que** le traitement thermique est effectué à une température comprise entre 350 °C et 500 °C.

18. Procédé selon l'une des revendications 14 à 17, **caractérisé en ce que** le traitement thermique est effectué pendant un intervalle de temps compris entre 45 minutes et 200 minutes.

19. Procédé selon l'une des revendications 14 à 17, **caractérisé en ce que** le traitement thermique est effectué pendant un intervalle de temps compris entre 60 minutes et 150 minutes.

20. Procédé selon l'une des revendications 14 à 19, **caractérisé en ce que** le profilé longitudinal (5) est constitué de deux corps formant coques (6, 7) en forme de U.

21. Procédé selon la revendication 20, **caractérisé en ce que** les corps formant coques (6, 7) sont soumis au traitement thermique avant l'assemblage pour former le profilé longitudinal (5).

22. Procédé selon la revendication 20, **caractérisé en ce que** le traitement thermique est effectué sur le profilé longitudinal (5) formé des corps formant coques (6, 7).

23. Procédé selon au moins l'une des revendications 14 à 22, **caractérisé en ce que** le profilé longitudinal (5) ou les corps formant coques (6, 7) formant le profilé longitudinal sont munis d'un revêtement avant ou après le traitement thermique.
